Europäisches Patentamt

European Patent Office

Office européen des brevets

(19)

(11) **EP 1 198 138 A1**

## (12) EUROPEAN PATENT APPLICATION

(43) Date of publication:
**17.04.2002 Bulletin 2002/16**

(51) Int Cl.7: **H04N 7/26**

(21) Application number: **00122483.1**

(22) Date of filing: **13.10.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **MATSUSHITA ELECTRIC INDUSTRIAL
CO., LTD.
Kadoma-shi, Osaka 571-8501 (JP)**

(72) Inventors:
• **Landsiedel, Thilo**
 **63110 Rodgau (DE)**
• **Wild, Arne**
 **55129 Mainz (DE)**

(74) Representative: **Grünecker, Kinkeldey,
Stockmair & Schwanhäusser Anwaltssozietät
Maximilianstrasse 58
80538 München (DE)**

## (54) Method and apparatus for film mode detection in video fields

(57) The present invention relates to a method and apparatus for film mode detection in video sequences of a field repetition rate of 50 Hz and 60 Hz. An improved perceived image quality is achieved by reducing the sensitivity of film mode detection to short discontinuities in motion between consecutive fields.

**Fig. 2**

EP 1 198 138 A1

**EP 1 198 138 A1**

**Description**

The present invention relates to a method and an apparatus for detecting film mode in a sequence of 50Hz or 60Hz video fields.

A detection of film mode in a video sequence is particularly relevant for a further processing of said video data. Such a further processing may relate to an improved image quality of the received video sequence, to a more effective compression algorithm etc.

Video signals received by a television receiver are generally in interlaced mode. In interlaced mode, only fields are transmitted to the receiver. Each field has half the number of lines compared with a complete frame, and succeeding fields comprise alternate lines of a frame, wherein a first field generally comprises lines having an odd line number and the succeeding field comprises lines have an even line number with respect to the lines of a corresponding frame.

A television receiver receives fifty fields per second in compliance with PAL television standard and sixty fields per second in conformity with NTSC television standard. Consequently, the PAL field repetition rate is 50Hz and NTSC field repetition rate 60Hz. Such a repetition rate reduces large area flicker when compared with a 25Hz/30Hz repetition rate of frames. The PAL and NTSC repetition rates correspond to a new field every 20ms (PAL) or 16.6ms (NTSC).

When a video camera is used as a video source, movements of a filmed object result in different positions of said object in consecutive fields. A re-composition of such two fields into a single frame would result in objectionable errors, such as saw tooth artefacts, in the reproduced picture as both fields relate to different motion phases.

Motion picture data is composed of complete frames only. Such motion picture information with a frame rate of twenty-four frames per second is converted into an interlaced video format, using a commonly known pulldown technique.

A 2-2 pulldown technique is employed in order to convert motion picture film into an interlaced PAL video signal. The 2-2 pulldown technique generates two fields out of each frame, which is repeated twice. In the 2-2 pulldown technique, two succeeding fields contain information originating from the same frame. To overcome the disparity in frequency, the film is played slightly faster at 25 instead of the original 24 frames per second.

When converting motion picture data into NTSC video signals, film data with a rate of 24 frames per second is converted into a 60 field per second video signal using a 3-2 pulldown technique. The 3-2 pulldown technique generates two video fields for a given film frame and three video fields for the next film frame.

A re-composition of succeeding fields into frames without image quality degradation is only possible if a video sequence can reliably determined to originate from motion picture data and the video fields which correspond to a common film frame are identified. As no special information is included in video signals for indicating whether or not a field originates from motion picture data, a film mode detection is employed before a re-composition of fields is carried out. Film mode detection distinguishes whether input video signals originate from motion picture data or e.g. from a video camera.

In case the source of film conversion is an animated or computer generated scene, every pulldown mode is possible, e.g. 3-4, 4-4, 4-5 etc. It depends largely on the quality of the scene and the number of source frames available. However, there is no standard guiding such conversions. It is a beneficial feature if the film mode detection in an encoding apparatus can be set to detect virtually any pulldown.

Document EP-A2-0 720 366 describes an apparatus and method for film mode detection. The method addresses a detection of patterns representative of 2-2 pulldown and 3-2 pulldown film originated frames. A film data comparison and accumulation unit calculates differences between pixels of a current field and vertical adjacent pixels of a previous field. The calculated differences are accumulated per field. Such field difference information is evaluated in a film data reduction unit by determining changes in the field difference information signal on successive fields. The changes in the field difference are compared to expected film-generated patterns using correlation techniques. For this purpose, a delayed field difference signal is subtracted from a current field difference signal. A one-bit per field sequence formed by the sign-bit of the resulting difference signal is compared with the predetermined film-generated patterns.

A further conventional film mode detector for 50Hz television signals is known from WO 94/30006. The described apparatus determines whether a video source is a motion picture film and identifies which two fields are from the same film frame. The described detection scheme looks for differences in motion between consecutive fields. The motion signal, consisting of ones for "motion" and zeros for "no motion", is applied to a sequence detector which looks for a "10" pattern in the motion signal. A detection of nine successive sequences of film mode pattern "10" causes the detector to enter film mode. A return to camera mode (called video mode) is performed when a detected pattern is inconsistent with film mode, namely a pattern of two ones. In case no motion is detected (corresponding to a pattern of continuous zeros) the present mode, either film or camera mode, is maintained.

A film mode detection apparatus has a plurality of areas of practical applications. A film mode indication, preferably together with a phase indication, detected for an interlaced video signal, may be utilized for format conversion processing between PAL and NTSC video sequences or vice versa. In particular, a film mode indication of a video sequence enables to add or eliminate correct fields in an interlaced video signal for providing a smooth movement in displayed video images. Further, an interlaced video signal may be treated as a progressively scanned signal by re-assembling the interlaced fields to complete frames. Such a progressive video sequence provides an improved signal source for a further processing of the video signal with improved image quality. Film mode detection may further be used in connection with video compression algorithms in order to identify redundant information and to reduce the amount of data to be transmitted.

When converting motion picture frame information into interlaced video information, frame data is converted into a field of odd lines and, next, a field of even lines. Due to a wrongly adjusted film converter it might happen that the succession order of even and odd lines of the fields is reversed, i.e. the even line fields are ahead of the corresponding odd line fields, when referring to the time domain. Such a reversion may also be corrected using film mode detection and the indication which pairs of fields belong to the same frame, here called motion phase indication.

Conventional film mode detection apparatus immediately return to camera mode indication as soon as motion has not been detected between three consecutive fields. Each switching between a film mode and a camera mode or vice versa results in a perceivable change of image quality. Such mismatch, namely not to detect the expected "10" pattern, may result from detection errors, a simplified processing algorithm, image distortions, a single camera mode frame etc. A conventional film mode detector immediately returns to camera mode which may result in an unnecessary switching between both modes.

It is the object of the present invention to provide an improved method and apparatus for film mode detection.

This is achieved by the teaching of claim 1 for a film mode detection method and by the teaching of claim 14 for a film mode detection apparatus.

According to the present invention, the indicated mode returns from a film mode indication to camera mode indication only in case the predetermined criterion is fulfilled in order to provide a "switch hysteresis". When a film mode detection failed for a predetermined number of consecutive fields the film mode indication is terminated.

Such a criterion avoids an unnecessary switching between film mode and camera mode in case of short discontinuities in a detected sequence of motion between the fields.

According to a preferred embodiment of the present invention pixel differences are calculated for corresponding pixels of consecutive fields and the calculated differences are accumulated for two different predefined portions of pixels of each field. A subsequent motion detection is based on the accumulated difference values for both image portions.

The teaching allows to detect motion between fields even if the video information originating from a video camera source is only present in a small proportion of image data of the field. Thus, a film mode detection apparatus and method according to the present invention will indicate "camera mode" even when a large proportion of "film mode" video data is present within an image. Based on these motion indications objectionable errors may be avoided when processing and reproducing "mixed mode" video data.

Based on the use of two image portions in order to decide whether motion is present between two consecutive fields, film mode detection is performed more accurately.

According to a further aspect of the invention, the second portion of a field for accumulating pixel differences is adjustable in size and/or position within a field in order to select a particular image region for motion detection. Such an adaptation of the second portion in size and/or position makes an even more accurate motion detection and, thus, film mode detection possible.

Preferably, motion detection is carried out by comparing the field differences accumulated for two consecutive fields with a threshold value. Such a motion detection does not require any complex hardware implementation.

In a more preferred embodiment, the threshold value for a current field difference value is the preceding field difference value. The use of preceding field difference values enables an adaptation of the motion detection to the image content. Consequently, a more accurate motion detection and, thus film mode detection may be achieved.

Preferably, the field differences accumulated for a first and second portion of a field are not compared separately with a threshold value, but are accumulated and the sum is applied to the comparing step. With such a combination, both field difference values are taken into account by a procedure simple to realise.

In a preferred embodiment, the second field difference value is multiplied by a weighting factor prior to accumulation with the first field difference value. Such a weighting procedure allows to emphasise the impact of the second portion on the motion detection result. Depending on the application and image content, a second (or further additional portions, each of these portions maybe weighted differently) may be taken into account in order to yield an improved film mode detection.

Preferably, the threshold value (in particular the preceding field difference) is weighted by a factor larger than 1. Such a weighting allows to adapt the threshold to a particular image content and to avoid a less accurate motion indication.

For film mode detection, a determined motion indicator sequence is preferably compared to pulldown patterns generated when converting motion picture film data into video field sequences. In most cases, a pulldown pattern for a conversion into PAL or NTSC video signals is employed.

Further advantageous embodiments of the present invention are the subject-matter of dependent claims.

The invention will be further described with reference to the accompanying drawings, in which:

Fig. 1a, 1b show timings of film frames converted to interlaced television signals according to PAL and NTSC standard, and the same signal delayed for a period of one field.

Fig. 2 shows a top-level block diagram of a film mode detection unit in an encoder according to the present invention.

Fig. 3 is a simplified block diagram showing details of an embodiment of a field difference unit (201).

Fig. 4 is a simplified block diagram showing details of an embodiment of a sequence register (202).

Fig. 5 is a flow-chart showing steps of a pattern matching algorithm, as embodied by the pattern matching unit (203).

Fig. 6 shows examples of a pattern matching for PAL television signals.

Fig. 7 shows examples of a pattern matching for NTSC television signals.

Fig. 8 shows an example of an image with a ticker insertion.

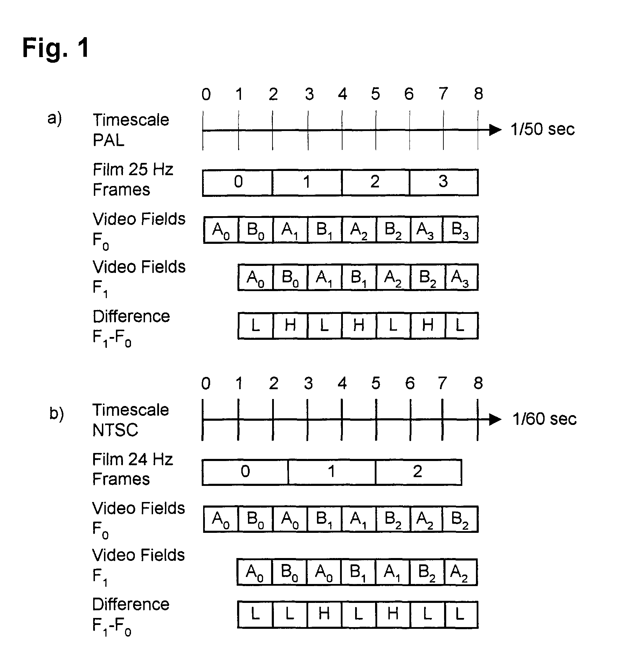

The top graphs in fig. 1a and 1b show a time scale wherein each division corresponds to the time period for one field of a corresponding television signal. Each time division in fig. 1a corresponds to 20ms and in fig. 1b to 16.6ms. The second graphs in fig. 1a and 1b give a corresponding time interval of a motion picture film frame having numbers 0, 1, 2, 3... For generating a PAL television signal, a motion picture frame rate of 25 frames per second is used wherein for a NTSC television signal a motion picture frame rate of 24 frames per second is used.

The third graphs in fig. 1a and 1b show a television signal $F_0$ comprising video fields. Each field of odd lines is marked with an "A" and each field of even lines with a "B". The film frame from which each field originates is indicated by the lower indexes. For instance, video fields $A_0$ and $B_0$ are based on film frame "0".

Video signal $F_1$ represents a television signal which corresponds to $F_0$ wherein each field being delayed by a time interval of one field. Correspondingly, a video signal $F_2$ would indicate a delay of two fields with respect to $F_0$.

The last graph in fig. 1a and 1b show whether an overall difference between $F_1$ and $F_0$ results in a low L or high H difference value. Each difference value L or H represents a low or high accumulated difference between the above depicted fields, respectively. As can be seen from figures 1a and 1b a difference between fields of the same index (originating from the same frame) result in a low difference level L and differences between fields of different index numbers (originating from different frames) result in a high H difference level.

When comparing the sequences of difference levels in figures 1a and 1b the difference level pattern result from the different employed pulldown techniques, either 2-2 or 3-2 pulldown.

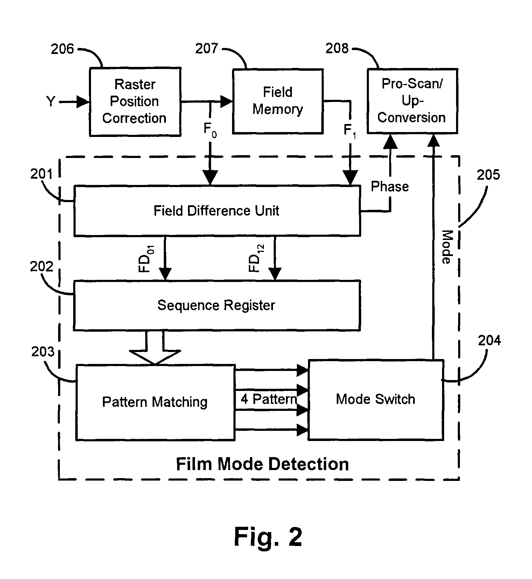

A configuration of a film mode detection unit in an encoder according to the present invention is shown in fig. 2. The film mode detector 205 comprises three main components, namely a film difference unit 201, a sequence register 202 and a pattern matching unit 203. Further, the film mode detector comprises a mode switch 204 in order to output a particular mode, either film mode or camera mode.

The film mode detector 201 further outputs a "phase" signal indicating which two of the fields $F_0$, $F_1$, $F_2$ were generated from the same film frame. This information may alternatively be obtained from a sequence of motion indicators at a later stage.

The input video signal Y is supplied to a raster position correction unit 206. Vertically adjacent pixels of consecutive fields are adjusted to have corresponding pixel positions, providing raster neutral and thus directly comparable fields $F_0$.

The video signal $F_0$ is delayed by a field delay memory 207 providing a video signal $F_1$. Both video signals $F_0$, $F_1$ are supplied to a field difference unit 201 of said film mode detection apparatus 205. The field difference unit 201 calculates absolute differences between pixels at corresponding horizontal and vertical pixel positions of two consecutive fields $F_0$, $F_1$.

The absolute difference values are accumulated for all pixels of a $F_0$. The resulting field difference value $FD_{01}$ (between a current field of video signal $F_0$ and video signal $F_1$), and the stored field difference value $FD_{12}$ (between video signals $F_1$ and $F_2$) are supplied to a sequence register 202. Based on the calculated field differences FD the field difference unit 201 detects motion between consecutive fields and outputs a motion indicative phase bit for each transition between two fields.

According to the present invention, the field difference values $FD_{01}$, $FD_{12}$ comprise difference values accumulated for two different portions of pixels of a field, respectively having first accumulated differences values $FD_{01A}$, $FD_{12A}$ for a first portion of pixels and second accumulated difference values $FD_{01B}$, $FD_{12B}$ for a second portions of pixels within a field. Additional field difference values maybe calculated for further portions within a field and handled respectively.

Sequence register 202 receives the four field differences FD and detects whether motion is present between succeeding fields based on both field differences $FD_A$ and $FD_B$ for each field. A corresponding motion bit is generated and stored in the register. Preferably, said sequence register is configured to store 40 motion bits.

The stored motion bits are supplied to a pattern matching unit 203 for determining whether or not the input video signal originates from motion pictures frames. Depending on the detected patterns, a mode switch 204 outputs a "mode" signal indicating "film mode" or "camera mode".

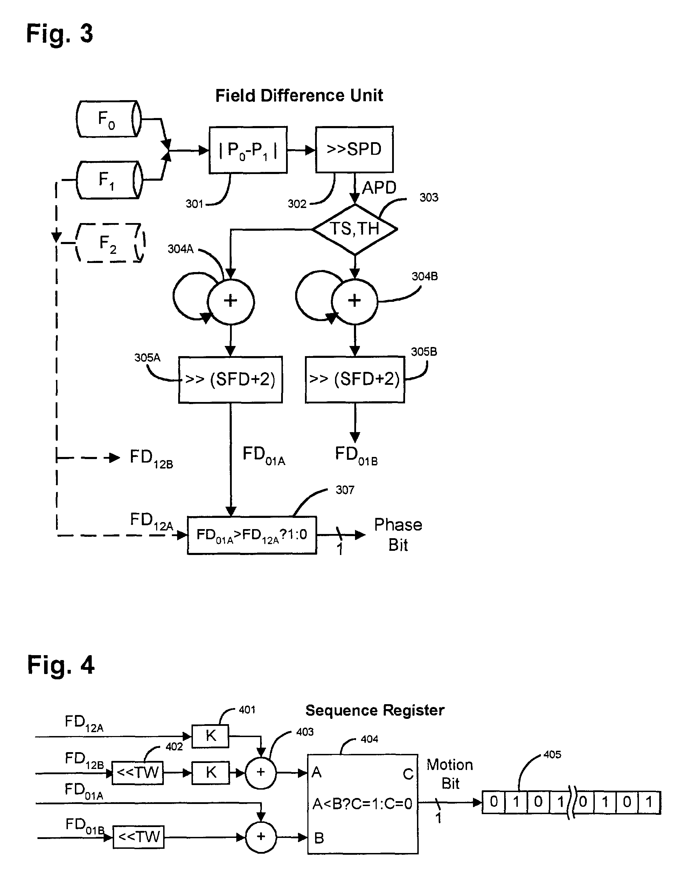

The field difference unit 201 will be described in more detail with reference to figure 3. The field difference unit 201 receives simultaneously video data $F_0$, $F_1$ representing two consecutive video fields. For a more accurate result, the processing of the field difference unit 201 is based on luminance information represented by an 8 bit data word per pixel.

In a different implementation the luminance and chrominance information might well have a data width of more than eight bits. In this case all following data processing is understood with a broader data path. Thus it can also be handled by this invention.

Based on the pixels $P_0$, $P_1$, which are in the same spatial position n and belong to corresponding fields $F_0$, $F_1$, the absolute pixel difference values APD are calculated in step 301. Each absolute pixel difference $APD_n$ again has a data width of eight bits. In order to emphasis on large differences only and on computational effort, the value of each APD may be shifted in step 302 by a shifting value SPD to the right in order to reduce the amount of data to be handled and to reduce the influence of noise on the determination result. It has turned out to be most effective to shift by a maximum of three bits. This operation is indicated by equation (1).

$$APD_n = |P_{n,0} - P_{n,1}| >> SPD \qquad (1)$$

According to a preferred embodiment of the present invention, the absolute differences APD are accumulated for at least two different portions A and B of pixels within a field, separately. Such a separate processing is indicated by separate processing paths in fig. 3 branching at decision step 303. At least one additional image portion serves to improve the accuracy of film mode detection.

Preferably, said first image portion A comprises essentially all active pixels of a field. The second and further additional image portions B only comprise a particular, considerably smaller image portion for emphasizing motion detection between two fields on that smaller image portion. As will be explained in more detail below, the sensitivity for motion within said second portion B might be further increased by increasing the impact of said second portion on the motion detection procedure.

Video information of an interlaced television signal may originate from motion picture film or from a video camera source. In an increasing number of situations a television video signal comprises video information of both sources in a single field, namely a main portion in film mode and a smaller portion in camera mode. Such fields regularly occur when television signals origination from motion picture film comprise inserted/overlaid information originating from a video camera source. Such additional information may be a text banner inserted in a bottom area of the video image. Said text banner of ticker usually displays service information provided by the broadcaster. Inserted service information may relate to the displayed image content, to a later program or to particular news information as e.g. stock exchange rates.

The inserted ticker may be at different positions within the field, depending on a broadcaster or country wide convention.

The afore mentioned mixed mode fields usually result from assembling video information obtained from different sources. In particular, new coding schemes as MPEG-4 allow for easy combination of image data originating from different sources within a single re-assembled image. Thus, a single field may comprise data originating from motion picture film, from a video camera source and/or from computer generated scenes.

In most fields in "mixed" mode almost all image information originates from image information in a first mode wherein only a small proportion results from data in a second mode (e.g. ticker insertion). Conventionally only the predominant first mode will be detected. Thus, the small proportion of image information in the second mode is disregarded.

Conventional detectors may cause objectionable errors in the reproduced image as an employed image processing device can not take the characteristics of the smaller image portion into account.

Depending on the particular area predefined for each portion A and B of the fields, the respective calculated absolute differences are accumulated in steps 304A, 304B separately. For the first portion A absolute pixel differences are accumulated in step 304A preferably for all pixels of a field or a particular portion having an aspect ratio of 16:9. The field difference unit 201 may switch between both areas for the first portion A depending on a particular flag FMDR.

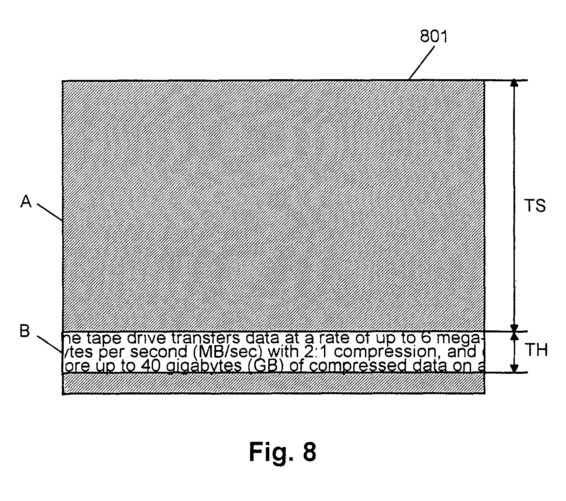

Pixels of a particular image portion B are accumulated in step 304B depending on an area definition by parameters TS and TH. These parameters define the position and height of portion B within the fields. An example of a possible area definition within a field can be obtained by reference to figure 8.

The resulting accumulated difference values may be shifted to the right in order to reduce hardware complexity of the further processing stages. It has turned out that at least a 2 bit shifting is advantageous for phase indication, because influences due to gaussian noise in the video signal are eliminated. The field difference values arrive at larger values proportional to both, the pixel data width and the field dimensions. Thus, the corresponding parameter SFD must be chosen adaptively to this proportional constants. The shift operation is shown in equation (2).

$$FD_{01} = \left( \sum_n APD_n \right) >> (2 + SFD) \qquad (2)$$

wherein $FD_{01}$ representing a field difference between a current field $F_0$ and a preceding field $F_1$ and n equals the number of active pixels in the field. The field difference unit outputs both accumulated field difference values $FD_{01A}$, $FD_{01B}$ which are calculated with respect to fields of $F_0$ and $F_1$. In addition, the preceding field difference values $FD_{12A}$, $FD_{12B}$ are supplied from the field difference unit 201 to the following processing stage, namely the sequence register 202.

The field difference unit 201 calculates in step 307 a phase indicator of one bit in order to indicate which of two fields are from the same film frame. A one indicates that fields $F_1$ and $F_2$ introduce a smaller field difference signal $FD_{12A}$ than the field $F_0$ and $F_1$ represented by the field difference signal $FD_{01A}$. A zero determines that $F_0$ and $F_1$ are more similar and thus could originate from the same film frame. In an alternative embodiment, this information is obtained from the stored motion indicators.

Fig. 4 shows a simplified block diagram of a sequence register 202. The sequence register 202 receives four field difference values supplied by said field difference unit 201, namely $FD_{01A}$ and $FD_{01B}$, $FD_{12A}$ and $FD_{12B}$. These field difference values relate to field differences of three consecutive fields and two different image portions A and B. Preferably, the field difference values relating to the same fields are combined before detecting motion information. The combination procedure will be described below in more detail.

In general, the motion bit is generated based on the value of field differences. Unfortunately, field differences are not only due to motion between consecutive fields but may also be due to vertical transitions, e.g. a horizontal dark line in front of a bright background. Such differences result from a vertical offset between odd and even fields. Thus, motion detection cannot only be based on the value of a field difference as this value also results from vertical transitions in a single frame.

The present invention uses an adaptive relative threshold in order to detect a transition between frames. According to the present invention, a current field difference $FD_{01}$ and the preceding field difference values $FD_{12}$ are compared. The preceding field difference value $FD_{12}$ is chosen rather to be weighted in step 401 by a factor K. Factor K preferably larger than 1 for best operation takes one of four values 2, 3/2, 4/3, 5/4. Any smaller or higher value did not lead to a better result. A field difference is considered to represent motion when the current field difference $FD_{01}$ being equal or greater than the preceding field difference $FD_{12}$ multiplied by factor K. Thus, if K=2, the current field difference $FD_{01}$ has to be twice as large as the preceding field difference $FD_{12}$ in order to assume motion between frames $F_0$ and $F_1$, otherwise, the fields $F_1$ and $F_2$ originate from the same frame. This comparison procedure is given in equation (3).

$$FD_{12} * K \le FD_{01} \qquad (3)$$

Correspondingly, a motion bit will be supplied to the sequence register. The sequence register 405 is being configured to store the number of motion bits necessary to reliably detect a film scene. It must not be longer than an average scene. Because then an interruption in the pattern might occur and the film mode will not be detected. Register 405 is a FIFO buffer (first in first out) with random access.

As motion detection is based on a particular amount of differences between consecutive fields, it may happen that motion detection fails between fields having no or only few motion in between. Such erroneously not detected film mode does not affect image quality as the scan/upconversion or other image processing of fields having almost no motion is not adversely affected.

Currently broadcast television programs occasionally comprise a ticker inserted within the lower third of a screen. As the main portion of each field may be in film mode, film mode will be detected. When the ticker insertion is in camera mode, a scan- or upconversion from interlaced to e.g. progressive (i.e. a sequence of complete frames) would result in deteriorated, hardly readable text of the ticker and the encoding efficiency is correspondingly effected. In such a case, namely when video data in camera mode is inserted into a field generally being in film mode, "camera mode" has to be detected in order to enable a correct upconversion and not to affect the further image processing and, finally, the perceived image quality.

For that purpose, the field difference unit 201 additionally calculates (at least) a second field difference value for a second portion B of pixels within each field. Two parameters define the second portion of pixels, namely TS and TH. Parameter TS indicates the vertical position of the top of the second portion B with respect to the top of the fields. The second parameter TH indicates the height of the second portion with respect to the remaining height of the field, i.e. the distance between the top of the second portion B and the bottom of the fields. This is shown in fig. 8. Within a field 801, parameters TS and TH give the vertical position and size of the second portion B. When using these predefined values for TS and TH only two bit data have to be used for the second portion B resulting in a simple hardware configuration. In a further preferred embodiment, the horizontal size of portion B maybe varied.

Preferably, the first portion corresponds to essentially the size of the active image portion of a field wherein the second (and further portions) have a much smaller size in order to focus on particular image areas.

The field difference unit 201 outputs four field difference values $FD_{01A}$, $FD_{01B}$, $FB_{12A}$, $FB_{12B}$. The field difference values $FD_{01B}$, $FD_{12B}$ resulting from the second portion are weighted in order to adjust the influence of the second portion on the motion detection result. For such a weighting procedure, the filed difference values for portion B are shifted in step 402 to the left. The amount of the left shift of the field difference values is set by parameter TW, which must be chosen adapetively to the overall field motion. Only this leads to a result accurate for all scenes. The comparison procedure carried out by motion detection unit 404 is given by equation (4).

$$K*(FD_{12A} + FD_{12B} << TW) \leq (FD_{01A} + FD_{01B} << TW) \tag{4}$$

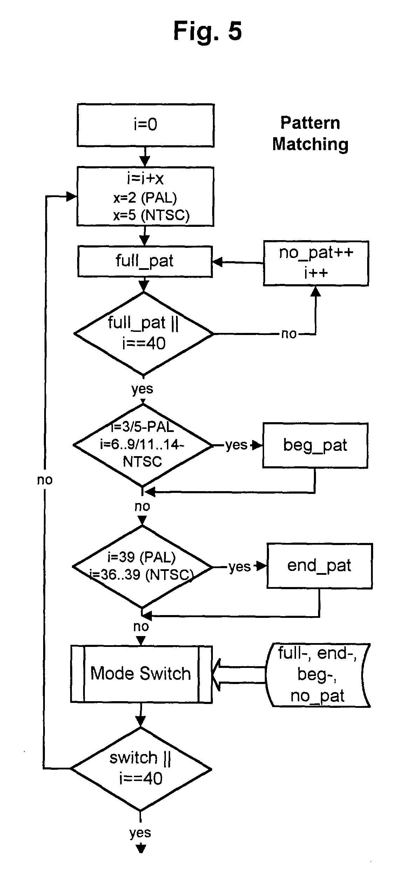

Fig. 5 represents a flow-chart of those steps carried out during pattern matching. In order to detect film mode in a sequence of motion bits which are provided by sequence register 202, a particular pattern of motion bits has to be detected.

Motion picture conversion according to 2-2 pulldown and 3-2 pulldown results in a characteristic pattern of stored motion bits. When an interlaced video, in particular television signal being generated by a 2-2 pulldown, FIFO 405 stores a repeated sequence of bits "10". In case of an NTSC video signal, generated by the 3-2 two pulldown technique, a bit sequence of "10010" occurs repetitively in register 405 when read from right to left. In the following paragraphs these two bit sequences are referred to as reference pattern. One of both may be selected depending on a parameter FORMAT (0=PAL, 1=NTSC).

A simple algorithm of pattern matching may detect one complete pattern in the motion bit sequence and correspondingly indicate film mode when detected. In order to provide a more reliable film mode indication, the present invention examines forty motion bits. Such a more complex matching procedure allows to implement detection error concealment algorithms.

According to the present invention pattern matching generates four different matching result registers (full_pat, beg_pat, end_pat, no_pat). Three of them indicate a matching result of the selected reference pattern with the stored data, namely full_pat for a complete pattern matching, beg_pat for the pattern running into the register and end_pat for the pattern running out of the register. Finally, it is detected whether no pattern or a destroyed pattern is present (no_pat).

The search procedure will be described in detail with reference to figure 5. Index i is provided in order to select all registered positions 1 to 40 of register 405. For pattern detection, the following steps are carried out.

First, index i is incremented by the length of the reference pattern, i.e. by 2 for a PAL television signal and by 5 for a NTSC television signal.

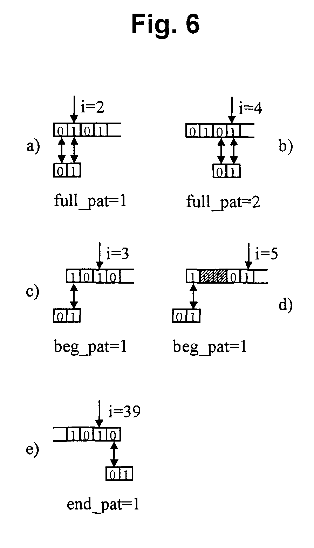

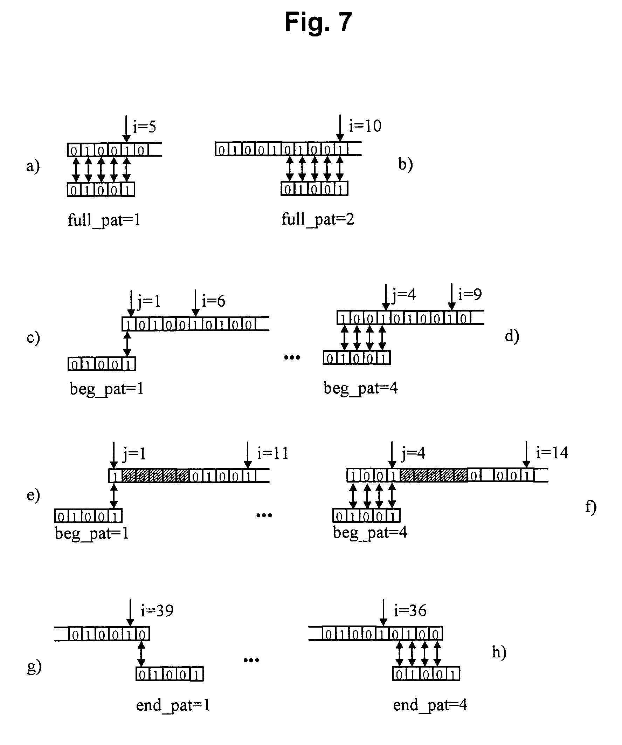

Second, in case the reference pattern is completely detected for the corresponding register positions, register full_pat is incremented by 1. An example for this is given in fig. 6a and fig. 6b for a PAL television signal at register positions 2 and 4. A corresponding example is given for a NTSC television signal in fig. 7a and fig. 7b.

In addition, a beginning pattern is searched when, at the beginning of the register, a number of bits remain having a number less than a complete pattern. Fig. 6c, Fig. 7c and Fig. 7d give examples for a detected "beginning pattern" preceding an already detected pattern for the immediate consecutive motion bit positions. When a partial pattern is found at the beginning of the register, which is in positional conformity with the detected complete pattern, register beg_pat is incremented by 1. The same situation applies to fig. 6d and fig. 7e and f. The situations correspond to those of fig. 6c and fig.7c and d. The only difference is that a first complete pattern could not be detected due to motion detection errors.

Finally, an ending pattern is shown in fig. 6e and fig. 7g and h. Register end_pat is incremented in situations corresponding to those of the beg_pat register.

In case no complete pattern has been detected, index i and register no_pat are incremented by one. Then, the processing returns to the first step.

Next, the conditions for signalling a mode switch are checked and, when the conditions are met or i = 40, the search is stopped.

The two existing reference patterns described for a conversion into PAL and NTSC interlaced video sequences may be replaced by new reference patterns relating to e.g. computer generated sequences.

Referring to fig. 2, the operation of mode switch 204 is described. Mode switch 204 receives count values for each pattern register, namely the registers full_pat, beg_pat, end_pat and no_pat. In addition, the mode switch receives parameters defining switching conditions in order to provide a more reliable film mode indication. These parameters, CDLY and FDLY, determine when to switch from film mode indication to camera mode indication and vice versa in order to effect a hysteresis behaviour. Such a hyseresis behaviour smoothes the switching between film and camera mode resulting in a less obvious change of image quality.

CDLY determines the number of fields which do not conform to a film mode pattern before the mode switch returns to camera mode. A single pattern not being equal to a film mode pattern should not initiate a return to camera mode. Depending on the image content and quality a number of 2 to 5 consecutive not detected film mode patterns provides good results with respect to image quality improvements.

The second parameter FDLY determines the number of consecutive fields which have to be in conformity with a reference pattern before mode switch 204 outputs a film mode indication. For a switch to film mode a single pattern not being equal to a film mode pattern should not be admitted.

These switching conditions are given by the following formula wherein equation (5) relates to a switch from film to camera mode and equation (6) relates to a switch from camera into film mode.

$$(\text{no\_pat} \geq \text{CDLY}) \ \&\& \ !\text{beg\_pat} \tag{5}$$

$$\text{full\_pat}^* \ (\text{2-PAL/5-NTSC}) + \text{beg\_pat+end\_pat} > \text{FDLY} \tag{6}$$

Summarising, the present invention provides a considerable increase in image quality by reducing the sensitivity of film mode detection to short discontinuities in detected motion sequences. Such discontinuities may originate from image content changes, motion detection or processing errors etc.

**Claims**

**1.** A method for detecting film mode in a sequence of video fields, comprising the steps of:

receiving a sequence of video fields to be encoded,

calculating (301) absolute pixel differences between spatially corresponding pixels of a current and a previous field,

accumulating (304A) said absolute pixel differences for a first predefined portion of a field and providing a first difference value ($FD_A$),

determining (404) whether or not motion is present between a current and a previous field based on the first field difference value ($FD_A$) and generating a motion indicator depending on the determination result,

indicating film mode when a predefined pattern is detected within a sequence of motion indicators, and

maintaining said film mode indication as long as the detection of said predefined pattern has not failed for a predetermined number of consecutive fields.

2. A method according to claim 1, wherein said maintaining step includes the following steps:

   incrementing a count value (no_pat) each time the detection step failed to detect said predefined pattern for a field,

   determining whether or not said count value (no_pat) exceeds a predetermined threshold value (CDLY),

   indicating film mode as long as said count value (no_pat) does not exceed said predetermined threshold value (CDLY) based on said determination result, and

   resetting said count value (no_pat) to zero each time said predefined pattern has been detected.

3. A method according to claim 1 or 2, further comprising the step of accumulating (304B) said absolute pixel differences for a second predefined portion of a field and providing a second field difference value ($FD_B$), wherein said determining step (404) for determining whether or not motion is present between a current and a previous field further bases the determination result on said second field difference value ($FD_B$).

4. A method according to claim 3 wherein said second portion of a field is adjustable in size and/or position within a field.

5. A method according to any of claims 1 to 4 wherein motion between two consecutive fields is determined by comparing a field difference value accumulated for a current field with a predetermined threshold value and motion is determined when said field difference value of the current field is larger than said threshold value.

6. A method according to claim 5, wherein said threshold value being a field difference value accumulated for the previous field.

7. A method according to claim 5 or 6 wherein the first and second field difference values of a field are accumulated prior to said comparing step.

8. A method according to any of claims 5 to 7, wherein said threshold value is multiplied (401) by a factor (K) prior to said comparing step, said factor (K) being larger than 1.

9. A method according to claim 7 or 8, wherein said second field difference ($FD_B$) value is multiplied (402) by a weighting factor (TW) prior to be accumulated with said first field difference value ($FD_A$), said factor (TW) having a value larger than 1.

10. A method according to any of claims 1 to 9, wherein said film mode detecting step comprises the steps of:

    storing motion indicators determined for a sequence of consecutive fields,

    detecting said predefined pattern within said sequence of stored motion indicators,

    indicating film mode when said predefined pattern is detected within said sequence of stored motion indicators.

11. A method according to any of claims 1 to 10, wherein said predefined pattern being a pull-down pattern for the conversion of film frames into video fields.

12. A method according to any of claims 1 to 11 wherein said pixel differences are calculated based on luminance information of the pixels.

13. A method according to any of claims 1 to 12 wherein an indication which two of three consecutive fields originate from the same film frame is generated based on the first field difference values ($FD_{01A}$, $FD_{12A}$), wherein those two fields are indicated to originate from same film frame having the smaller first field difference values ($FD_{01A}$, $FD_{12A}$).

**14.** An apparatus for detecting film mode in a sequence of video fields, comprising:

a subtractor (301) for calculating pixel differences between spatially corresponding pixels of a current and a previous field,

a rectifier (301) for receiving said calculated pixel differences and providing absolute pixel differences,

a first (304A) for accumulating said absolute pixel differences received from said rectifier for a first portion within a field and providing a first field difference value,

a motion detection unit (202) for determining whether or not motion is present between a current and a previous field based on the field difference value and generating a corresponding motion indicator,

a pattern matching unit (203) for comprising:

a comparator for comparing a predefined pattern with a sequence of generated motion indicators, and

a register (no_pat) for storing a count value which is incremented based on the comparation result each time said predefined pattern is not detected for a field,

a mode switch (204) for generating a film mode indication based on a detection of said predefined pattern by said pattern matching unit (203), said mode switch (204) comprising a comparator for comparing the count value of said register (no_pat) with a predetermined threshold value (CDLY) and film mode being indicated as long as the count value of said register (no_pat) does not exceed said threshold value (CDLY).

**15.** An apparatus according to claim 14, further comprising

a second accumulator (304B) for accumulating said absolute pixel differences received from said rectifier for a second portion, providing a second field difference value, and

said motion detection unit (202) being adapted to base the determination further on the second field difference value.

**16.** An apparatus according to claim 15, further comprising offset control means for adjusting the position of said second portion within a field and/or a size control means adjusting a size of said second portion in vertical and/or horizontal direction.

**17.** An apparatus according to any of claims 14 to 16 further comprising a comparator (404) for comparing a field difference value accumulated for a current field with a predetermined threshold value and motion being determined when said field difference value of the current field being larger than said threshold value.

**18.** An apparatus according to claim 17, wherein a field difference value accumulated for the previous field being applied to said comparator (404) as said threshold value.

**19.** An apparatus according to claims 17 or 18 further comprising adding means (403) for adding the first and the second field difference values of a field before providing the sum of both field difference values to said comparator (404).

**20.** An apparatus according to any of claims 17 to 19, further comprising a multiplier (401) for multiplying the field difference value of the previous field by a factor (K) and providing the result to said comparator (404), said factor (K) being larger than 1.

**21.** An apparatus according to claims 19 or 20, further comprising a multiplier (402) for multiplying said second field difference value by a weighting factor (TW) and providing the multiplication result to said adder (403), said factor (TW) having a value larger than 1.

**22.** An apparatus according to any of claims 14 to 21, further comprising a memory for storing a pull-down pattern of a particular conversion of film frames into video fields, said stored pull-down pattern being applied to said pattern matching unit (203) as said predefined pattern.

23. An apparatus according to any of claims 14 to 22 further comprising a phase detector (307) receiving the two first field difference values ($FD_{01A}$, $FD_{12A}$) calculated with respect to three consecutive fields ($F_0$, $F_1$, $F_2$) for indicating which two of the three consecutive fields originate from the same film frame based on the first field difference values, wherein those two fields are indicated to originate from the same film frames having the smaller field difference value.

# Fig. 1

**a)**

Timescale PAL

0 1 2 3 4 5 6 7 8 → 1/50 sec

Film 25 Hz Frames

| 0 | 1 | 2 | 3 |

Video Fields $F_0$

| $A_0$ | $B_0$ | $A_1$ | $B_1$ | $A_2$ | $B_2$ | $A_3$ | $B_3$ |

Video Fields $F_1$

| $A_0$ | $B_0$ | $A_1$ | $B_1$ | $A_2$ | $B_2$ | $A_3$ |

Difference $F_1$-$F_0$

| L | H | L | H | L | H | L |

**b)**

Timescale NTSC

0 1 2 3 4 5 6 7 8 → 1/60 sec

Film 24 Hz Frames

| 0 | 1 | 2 |

Video Fields $F_0$

| $A_0$ | $B_0$ | $A_0$ | $B_1$ | $A_1$ | $B_2$ | $A_2$ | $B_2$ |

Video Fields $F_1$

| $A_0$ | $B_0$ | $A_0$ | $B_1$ | $A_1$ | $B_2$ | $A_2$ |

Difference $F_1$-$F_0$

| L | L | H | L | H | L | L |

**Fig. 2**

# Fig. 3

**Field Difference Unit**

# Fig. 4

# Fig. 5

**Pattern Matching**

```
i=0
  │
  ▼
i=i+x
x=2 (PAL)
x=5 (NTSC)
  │
  ▼
full_pat  ◄────── no_pat++
  │                  i++
  ▼                   ▲
full_pat ||           │
i==40 ─────no─────────┘
  │
 yes
  ▼
i=3/5-PAL
i=6..9/11..14-    ──yes──►  beg_pat
NTSC                          │
  │◄──────────────────────────┘
 no
  ▼
i=39 (PAL)
i=36..39 (NTSC)  ──yes──►  end_pat
  │                          │
  │◄──────────────────────────┘
 no
  ▼
Mode Switch  ◄══════  full-, end-,
  │                    beg-,
  ▼                    no_pat
switch ||
i==40
  │
 yes
  ▼
```

# Fig. 6

a)

i=2

| 0 | 1 | 0 | 1 | |

| 0 | 1 |

full_pat=1

b)

i=4

| 0 | 1 | 0 | 1 | |

| 0 | 1 |

full_pat=2

c)

i=3

| | 1 | 0 | 1 | 0 | |

| 0 | 1 |

beg_pat=1

d)

i=5

| 1 | ▨ | 0 | 1 | |

| 0 | 1 |

beg_pat=1

e)

i=39

| | 1 | 0 | 1 | 0 | |

| 0 | 1 |

end_pat=1

# Fig. 7

801

A

B

ne tape drive transfers data at a rate of up to 6 mega-
/tes per second (MB/sec) with 2:1 compression, and
ore up to 40 gigabytes (GB) of compressed data on a

TS

TH

## Fig. 8

**European Patent Office**

# EUROPEAN SEARCH REPORT

Application Number

EP 00 12 2483

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 994 626 A (ST MICROELECTRONICS SRL) 19 April 2000 (2000-04-19) | 1,5,7,8, 10,11, 14,17, 19,20,22 | H04N7/26 |
| | * paragraph [0066] - paragraph [0073] * <br> * paragraph [0097] * | | |
| Y | | 3,4,12, 13,15, 16,23 | |
| A | | 2,6,9, 18,21 | |
| | --- | | |
| Y | WO 00 33579 A (HUI YAU WEI LUCAS ;STMICROELECTRONICS ASIA PACIFI (SG)) 8 June 2000 (2000-06-08) <br> * page 1, line 13 - page 4, line 14 * <br> * page 5, line 21 - page 5, line 29 * <br> * page 7, line 28 - page 9, line 15 * <br> * figures 2-5 * <br> * claim 23 * | 3,4,12, 13,15, 16,23 | |
| A | | 1,14 | **TECHNICAL FIELDS SEARCHED (Int.Cl.7)** |
| | --- | | |
| A | WO 00 51355 A (HUI YAU WEI LUCAS ;GOH KWONG HUANG (SG); STMICROELECTRONICS ASIA P) 31 August 2000 (2000-08-31) <br> * page 3, line 19 - page 6, line 15 * | 1,13,14, 23 | H04N |
| | --- | | |
| A | US 5 852 473 A (TABATABAI ALI ET AL) 22 December 1998 (1998-12-22) <br> * column 2, line 20 - column 2, line 37 * <br> * claims 3,7 * | 1,14 | |
| | --- | | |
| A | EP 0 933 942 A (MATSUSHITA ELECTRIC IND CO LTD) 4 August 1999 (1999-08-04) <br> * paragraph [0033] * <br> * paragraph [0095] - paragraph [0099] * | 1-23 | |
| | ----- | | |

The present search report has been drawn up for all claims

| Place of search | Date of completion of the search | Examiner |
|---|---|---|
| THE HAGUE | 12 February 2001 | Fassnacht, C |

EPO FORM 1503 03.82 (P04C01)

## ANNEX TO THE EUROPEAN SEARCH REPORT
## ON EUROPEAN PATENT APPLICATION NO.

EP 00 12 2483

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2001

| Patent document cited in search report | | Publication date | Patent family member(s) | | Publication date |
|---|---|---|---|---|---|
| EP 0994626 | A | 19-04-2000 | JP 2000125303 A | | 28-04-2000 |
| WO 0033579 | A | 08-06-2000 | NONE | | |
| WO 0051355 | A | 31-08-2000 | NONE | | |
| US 5852473 | A | 22-12-1998 | NONE | | |
| EP 0933942 | A | 04-08-1999 | WO 9904569 A | | 28-01-1999 |

For more details about this annex : see Official Journal of the European Patent Office, No. 12/82